# EUROPEAN PATENT SPECIFICATION

(11) **EP 1 552 993 B1**
(45) Date of publication and mention of the grant of the patent: **13.02.2008**
(21) Application number: 04425259.1
(22) Date of filing: 08.04.2004
(51) Int. Cl.: B60R 22/48

(54) **A device for indicating the correct tensioning of a restraining strap of a safety device**
Vorrichtung für Anzeigen eine korrekte Spannung des Sicherheitsgurtes
Dispositif pour indiquer une tension correcte d'une ceinture de sécurité

(30) Priority: 09.01.2004 IT TO20040007
(43) Date of publication of application: 13.07.2005
(73) Proprietor: SABELT S.p.A., 10129 Torino (IT)
(72) Inventor: Pezza, Elsa Angelina Caterina, 10032 Brandizzo (Torino) (IT)
(74) Representative: Jorio, Paolo

(56) References cited:
- EP-A- 0 449 772
- EP-A- 1 247 704
- WO-A-02/06092
- GB-A- 2 376 925
- US-A1- 2002 145 422
- US-A1- 2003 197 415
- ANONYMOUS: "Child seat tension monitor" RESEARCH DISCLOSURE, KENNETH MASON PUBLICATIONS, HAMPSHIRE, GB, vol. 390, no. 8, October 1996 (1996-10), XP007121316 ISSN: 0374-4353

## Description

The present invention relates to a device adapted to indicate the correct tensioning of a restraining strap of a safety device. The invention is directed particularly towards restraining belts of motor-vehicle child safety seats; however, as will be clear from the following description, it is also applicable to any other restraining strap, for example, a strap for anchoring a child safety seat on a motor-vehicle seat.

Restraining belts for motor-vehicle child safety seats are generally formed with three or five branches. A first branch is attached at one of its free ends to a buckle body, whereas the two or four remaining branches are attached at their free ends to respective coupling elements, or tongues, adapted to be inserted and locked in the buckle body. However, the restraining belts are often not adjusted correctly according to the size of the child and, once fastened, are therefore not completely tensioned and cannot perform their restraining function properly, particularly in the event of an accident.

US 2003/197415 A discloses a web adjuster device for securing and varying a length of a web. The web adjuster device comprises a connector portion and an adjuster portion, and includes an indicator to inform the user when a piston is either proximally or distally displaced within a rigid hollow cylinder.

EP 1247704 A discloses a seat belt connector assembly, which is provided with a seat belt anchor coupled to a passenger seat and with a cover for accommodating an upper part of the seat belt anchor. The seat belt anchor and the cover, which are relatively movable, are each formed with a seat-belt insertion hole permitting a seat belt to pass therethrough, and are formed with a mark and a through hole, respectively.

When the desired relative position permitting the desired tension force to be applied to the seat belt is established between the seat belt anchor and the cover, the mark is made visible through the through hole.

GB 2376925 A discloses a seat belt tension sensing device adapted for sensing tension in a belt securing a child's car seat in a vehicle. The device comprises a housing having an upper housing member hingedly attached to a lower housing member, and a closure catch to permit the passage of a length of seat belt through the housing to pass over a depressible switch. Within the housing is a power source and alarm/indicator responsive to a signal emitted by the switch when actuated by the seat belt passing over the switch. Sufficient belt tension may be shown by a visible indicator, while insufficient tension may be indicated by an audible alarm.

WO 02/06092 A discloses a seat belt tension sensing assembly fixedly secured to a vehicle. The seat belt tension sensing assembly has a housing and a slider, which is slidably received within the housing to move between a first position and a second position to indicate a tension in the seat belt. The slider has a first opening for a portion of the seatbelt to pass therethrough. A Hall effect device is fixedly secured to the housing.

The object of the present invention is to provide a device which can indicate directly and in a manner easily understandable to the user whether a restraining strap, in particular for a child safety seat, is correctly tensioned.

This and other objects are achieved according to the present invention by virtue of a device for indicating the correct tensioning of a restraining strap having the characteristics defined in Claim 1.

Further characteristics and advantages of the invention will become clear from the following detailed description, given purely by way of non-limiting example with reference to the appended drawings, in which:
- Figure 1 is a perspective view of a device for indicating the correct tensioning of a restraining strap, associated with a conventional strap-length adjuster,
- Figure 2 is a partially-sectioned plan view of the indicating device of Figure 1,
- Figure 3 is a perspective view of another device for indicating the correct tensioning of a restraining strap,
- Figure 4 is a partially-sectioned plan view of the indicating device of Figure 3,
- Figure 5 is a partially-sectioned side elevational view of another device for indicating the correct tensioning of a restraining strap, associated with a conventional strap-length adjuster,
- Figure 6 is a partially-sectioned plan view of the indicating device of Figure 5,
- Figure 7 is a perspective view of a preferred embodiment according to the present invention of a device for indicating the correct tensioning of a restraining strap,

Figure 8 is a partially-sectioned side elevational view of the indicating device of Figure 7, and
Figure 9 is a partially-sectioned side elevational view of another device for indicating the correct tensioning of a restraining strap.

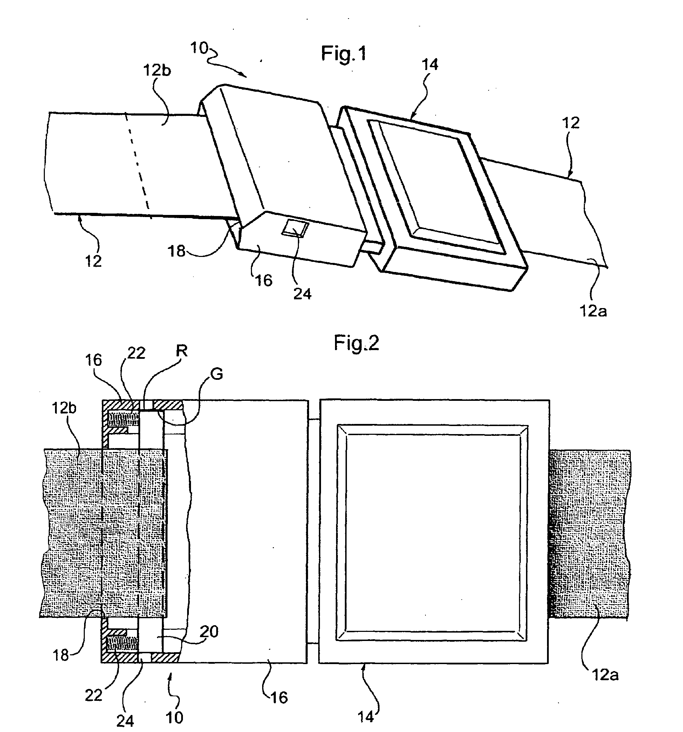

With reference initially to Figures 1 and 2, a device for indicating the correct tensioning of a restraining strap 12 (for example, a safety belt of a motor-vehicle child seat) is generally indicated 10. In the embodiment shown, the device 10 is associated with a conventional adjuster 14 for adjusting the length of the strap 12. However, this application is not limiting in any way since the device can be installed equally well at any point of the strap 12 between a first end thereof attached to a fixed structure (for example, to a child seat or to a conventional motor-vehicle seat) and the opposite end, generally fixed to a buckle fastening device. The device may also be installed in the buckle fastening device itself.

In this first embodiment, the indicating device 10 comprises a casing or shell 16 which is preferably made of plastics material and has, for example, a substantially parallelepipedal shape. The casing 16 is fixed at a first longitudinal end thereof (where the term "longitudinal" relates to the lengthwise direction of the strap) to the adjuster device 14, in which an end of a first branch 12a of the strap 12 is inserted in a manner known *per se.* At the opposite end, the casing 16 has a slot 18 through which extends an end of a second branch 12b of the strap which is wrapped around and clamped on a rod-shaped slide 20 mounted for sliding longitudinally inside the casing 16.

The rod-shaped slide 20 of the device 10 bears on a pair of springs 22, for example, helical compression or flat springs, the resilient characteristics (preloading and/or stiffness) of which are selected such that the slide 20 is kept in a first position shown in Figure 2 as long as the force tensioning the strap 12 is below a predetermined value.

According to the invention, this slack condition of the restraining strap is indicated to the user by means of an indicating window 24 formed in the casing 16 of the device 10, preferably in each of its two side faces. A red coloured area (indicated R in Figure 2) on one end of the slide 20 is shown to the exterior through each window 24. When, however, once the minimum permissible tension has been roached, the slide 20 moves towards the slot 18, overcoming the resilient force of the springs 22, a green coloured area (indicated G), adjacent the red area R, is displayed to the exterior through each indicating window 24. The user who is fastening the restraining belt is thus immediately able to recognize whether it is adjusted correctly, that is whether, once the belt has been fastened, its branches are sufficiently tensioned.

Naturally, the colours used to distinguish the two, slack and correctly tensioned conditions may be other than those indicated above. Similarly, different graphic symbols may be used to mark the two operating conditions.

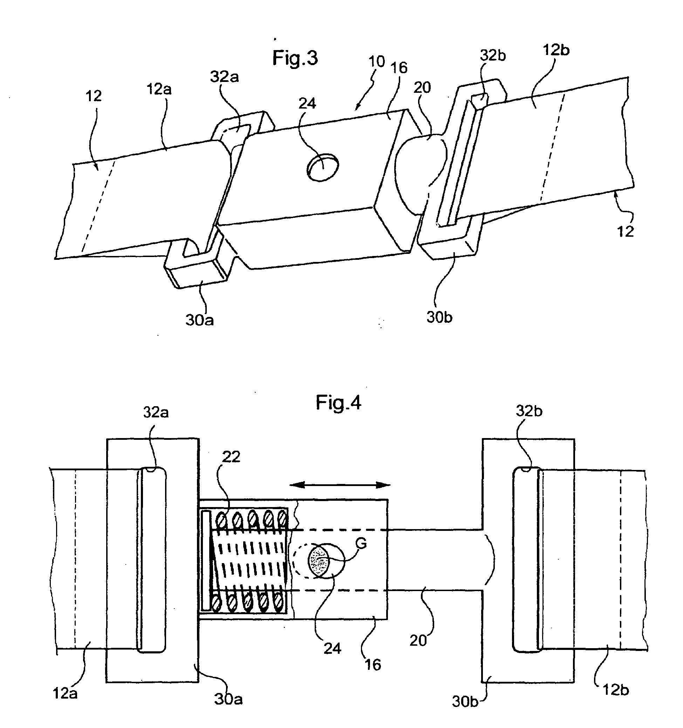

A second embodiment of the indicating device is shown in Figures 3 and 4, in which parts and elements identical or corresponding to those of Figures 1 and 2 have been attributed the same reference numerals.

In this case, the indicating device 10 comprises a casing 16 fixed to the first strap branch 12a by means of a first fixing element 30a provided with a slot 32a, and a substantially cylindrical movable member 20 which extends longitudinally and is fixed to the second strap branch 12b by means of a second fixing element 30b provided with a slot 32b. The movable member 20 is arranged so as to be slidable longitudinally inside the casing 16 between a first, retracted position and a second, extended position. Until a predetermined force tensioning the belt 12 is reached, the movable member 20 is kept in the retracted position by the resilient force of a cylindrical helical spring 22 wound around it. When the force tensioning the two strap branches 12a and 12b is increased, the movable member 20 is moved in the opposite direction to the resilient biasing force of the spring 22 until the above-mentioned second position, corresponding to the correct tensioning condition, is reached. In this case, this condition is indicated to the user by virtue of a coloured mark G (for example, a green dot) which is provided on the cylindrical lateral surface of the slidable member 20 and which is displayed through an opening 24 in the casing 16.

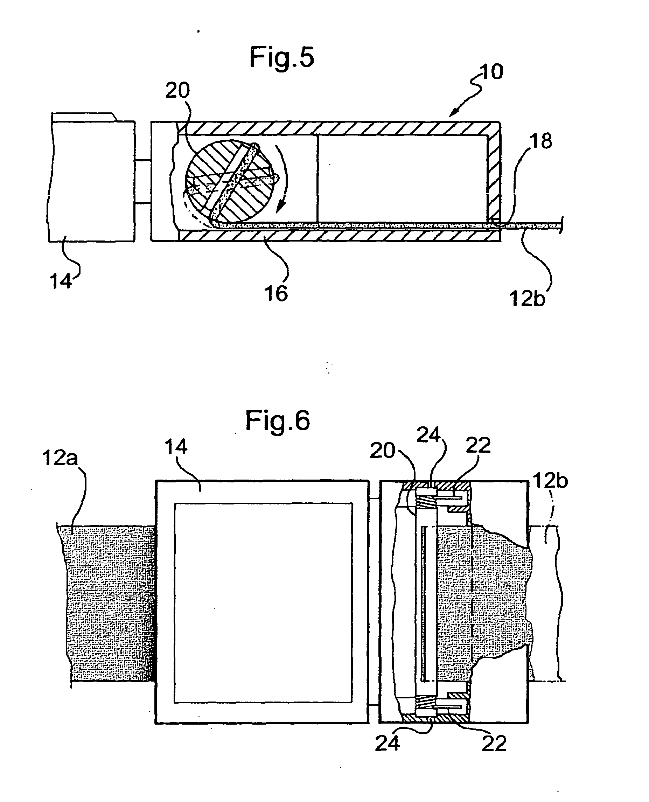

A third embodiment of the indicating device is shown in Figures 5 and 6, in which parts and elements identical or corresponding to those of the preceding figures have been attributed the same reference numerals.

In this case, as in the first embodiment described above, the indicating device 10 is again associated with an adjuster 14 of a type known *per se,* for adjusting the length of the restraining strap 12. An end of the first strap branch 12a is fixed releasably to the adjuster 14, whereas an end of the second strap branch 12b extends through a slot 18 formed in the casing 16 of the device 10 and is secured to a cylinder 20 which extends transversely and is rotatably mounted about its own axis. The cylinder 20 is held by the resilient force of a spring 22 in a first angular position (shown in broken line in Figure 5) as long as the force tensioning the strap 12 is below a predetermined value. Above that value, on the contrary, the cylinder 20 rotates about its own axis until it reaches a final angular position corresponding to the correct value of the force tensioning the strap.

This final position is indicated to the user by virtue of an indicating window 24, or a pair of windows, provided on one or both of the two side walls of the casing 16. In this case, indication again takes place by means of a graphic symbol (not shown) depicted on one or each of the ends of the rotatable cylinder 20.

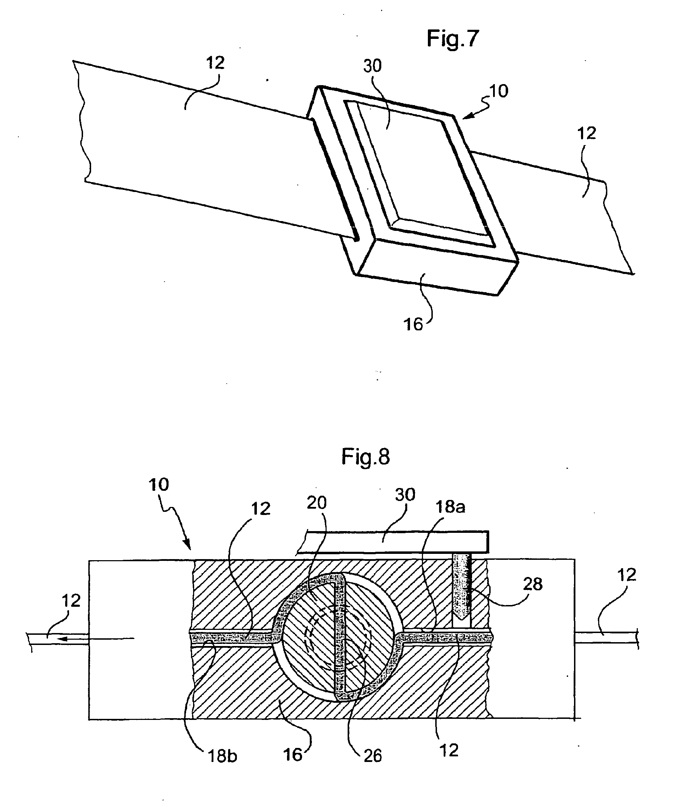

A embodiment of the indicating device according to the invention is shown in Figures 7 and 8, in which parts and elements identical or corresponding to those of the preceding figures have been attributed the same reference numerals.

As for the third embodiment described above, a cylinder 20 extending transversely with respect to the strap 12 is again provided in this embodiment and is mounted in the casing 16 of the indicating device 10 so as to be rotatable about its own axis. However, in contrast with the constructional solution of Figure 5, the strap 12 is not divided into a first branch and a second branch but is formed as a continuous branch which extends through the casing 16, for example, extending along a pair of guide slots 18a and 18b, and engages with the cylinder 20 passing through a diametral slot 26 formed in the cylinder. A locking member 28 is advantageously provided to enable the device 10 to be fixed in a predetermined position along the strap 12 and is formed, for example, as a pin adapted to press the strap 12 against a surface of the guide slot 18a. The pin can be operated by the user by means of a slide 30.

The operating principle is similar to that described with reference to the embodiment of Figures 5 and 6. The cylinder 20 is held in a first angular position (shown in Figure 8) by the resilient force of a spring (not shown), as long as the force tensioning the strap 12 is below a predetermined value. Above this value, on the contrary, the cylinder 20 rotates about its own axis until it reaches a final angular position corresponding to the correct value of the force tensioning the strap.

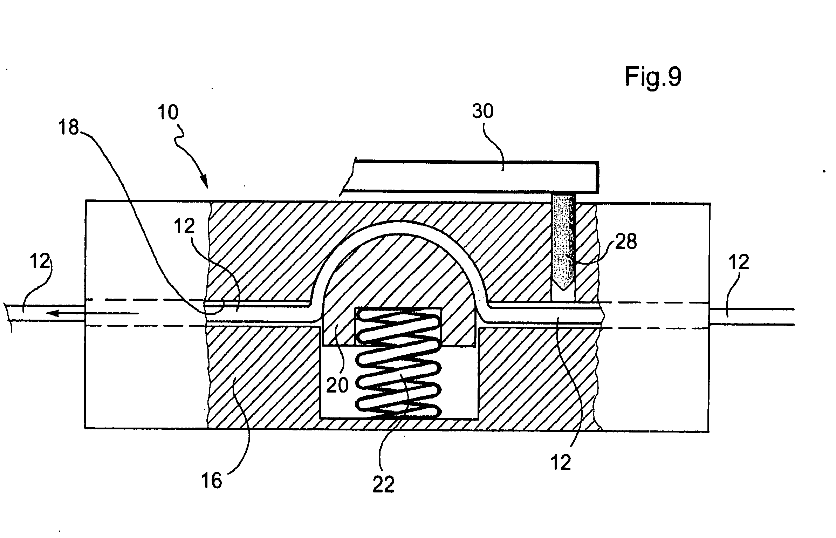

Finally, another embodiment of the indicating device is shown in Figure 9 in which parts and elements identical or corresponding to those of the preceding figures have been attributed the same reference numerals.

As for the first embodiment described above, a slide 20 which extends transversely with respect to the strap 12 is again provided in this case and is mounted inside the casing 16 so as to be slidable in a perpendicular or inclined direction with respect to the plane of the strap 12. Moreover, as in the fourth embodiment, the strap 12 is formed as a continuous branch which extends through the casing 16 and is wrapped around a substantially semicylindrical upper surface of the slide 20. A pin-like locking member 28 is again provided in this case and can be operated by the user by means of a slide 30 to enable the device 10 to be fixed in a given position along the strap 12. The slide 20, which is subject to the resilient force of a spring 22, keeps the strap 12 clamped against an upper wall of the casing 16 (as shown in Figure 9) as long as the force tensioning the strap 12 is below a predetermined value. Above this value, on the contrary, the slide 20 is moved downwards until it reaches a final position which is indicative of the correct tensioning condition of the strap 12.

These last two embodiments thus have the advantage that they do not require the strap to be separated into two distinct branches, which leads to a simplification of the process for the manufacture of the restraining system and hence a reduction in its cost.

Naturally, the principle of the invention remaining the same, the embodiments and details of construction may be varied widely with respect to those described and illustrated purely by way of non-limiting example, without thereby departing from the scope of the invention as defined in the appended claims.

## Claims

1. An indicating device (10) for indicating the correct tensioning of a restraining strap (12) of a safety device, in particular of a motor-vehicle child safety seat, the device comprising:
- a movable element (20) operatively associated with the strap (12) so as to be movable towards a given position, which is indicative of the correct-tensioning condition, as a result of the pulling force applied to the strap (12)
- resilient means (22) for exerting, on the movable element (20) an action opposing that exerted by the pulling force on the strap (12) so as to prevent the movable element (20) from reaching the said position as long as the pulling force exerted on the strap (12) is less than a given predetermined value, and
- display means (24 ; G, R) for supplying a signal indicative of the correct-tensioning condition of the strap (12) when the movable element (20) is in the said position;
- a casing (16) inside which the movable element (20) is mounted; said restraining strap (12) being formed as a continuous branch which extends through said casing (16);
**characterised in that** said movable element (20) is a cylinder, which extends in the transverse direction with respect to said strap (12), is rotatable about its own axis towards said position against the action of said resilient means, and has a diametral slot (26) engaged by said restraining strap (12).

2. - Device according to claim 1, **characterised in that** said casing (16) comprise a pair of guide slots (18a, 18b) located on opposite sides of said movable member and slidably engaged by said restraining strap (12).

3. - Device according to claim 1 or 2, **characterised by** further comprising a locking member (28) to fix the device (10) in a predetermined position along said restraining strap (12).

4. - Device according to claims 2 and 3, **characterised in that** said locking member comprises a pin (28) adapted to press said restraining strap (12) against a surface of one of said guide slot (18a).

5. - Device according to anyone of the preceding claims, **characterised in that** said display means comprise at least one window (24) formed in a wall of the casing (16) and at least one graphic symbol (G) which is indicative of the correct-tensioning condition of the strap (12), and which is provided on the movable element (20) in a manner such as to be visible through the window (24) when the movable element (20) is in the said correct-tensioning position.

## Patentansprüche

1. Anzeigevorrichtung (10) zum Anzeigen der richtigen Spannung eines Haltegurtes (12) einer Sicherheitsvorrichtung, insbesondere eines Kraftfahrzeug-Kindersitzes, wobei die Vorrichtung umfasst:
- ein bewegliches Element (20), wirksam verbunden mit dem Gurt (12), um infolge der auf den Gurt (12) angelegten Zugkraft in Richtung auf eine gegebene Position, die den richtigen Spannzustand anzeigt, bewegbar zu sein,
- Federeinrichtungen (22) zum Ausüben einer Wirkung auf das bewegliche Element (20), die der durch die Zugkraft auf den Gurt (12) ausgeübten entgegenwirkt, um das bewegliche Element (20) solange daran zu hindern, die Position zu erreichen, wie die auf den Gurt (12) ausgeübte Zugkraft kleiner als ein gegebener vorbestimmter Wert ist,
- Anzeigemittel (24, G, R) zum Bereitstellen eines Signals, das den richtigen Spannzustand des Gurtes (12) anzeigt, wenn das bewegliche Element (20) in der Position ist, und
- ein Gehäuse (16), in dem das bewegliche Element (20) angebracht ist, wobei der Haltegurt (12) als ein kontinuierlicher Arm (12) ausgebildet ist, der sich durch das Gehäuse (16) erstreckt,
und **dadurch gekennzeichnet ist, dass** das bewegliche Element (20) ein Zylinder ist, der sich in Bezug auf den Gurt (12) in der Querrichtung erstreckt, gegen die Wirkung der Federeinrichtungen drehbar um seine Achse in Richtung auf die Position ist und einen diametralen Schlitz (26) aufweist, mit dem der Haltegurt (12) in Eingriff steht.

2. Vorrichtung nach Anspruch 1, **dadurch gekennzeichnet, dass** das Gehäuse (16) ein Paar Führungsschlitze (18a, 18b) umfasst, die auf gegenüberliegenden Seiten des beweglichen Elementes angeordnet sind und mit denen der Haltegurt (12) verschiebbar in Eingriff steht.

3. Vorrichtung nach Anspruch 1 oder 2, **dadurch gekennzeichnet, dass** sie des Weiteren ein Arretierglied (28) umfasst, um die Vorrichtung (10) in einer vorgegebenen Position entlang dem Haltegurt (12) zu fixieren.

4. Vorrichtung nach den Ansprüchen 2 und 3, **dadurch gekennzeichnet, dass** das Verriegelungsglied einen Stift (28) umfasst, der eingerichtet ist, um den Haltegurt (12) gegen eine Fläche von einem der Führungsschlitze (18a) zu pressen.

5. Vorrichtung nach einem der vorhergehenden Ansprüche, **dadurch gekennzeichnet, dass** die Anzeigeeinrichtung wenigstens ein Fenster (24), das in einer Wand des Gehäuses (16) ausgebildet ist, und wenigstens ein grafisches Symbol (G) umfasst, das den richtigen Spannzustand des Gurtes (12) anzeigt und das auf dem beweglichen Element (20) in einer solchen Art und Weise bereitgestellt ist, dass es durch das Fenster (24) sichtbar ist, wenn das bewegliche Element in der richtigen Spannposition ist.

## Revendications

1. Dispositif indicateur (10) destiné à indiquer la tension correcte de la sangle de retenue (12) d'un dispositif de sécurité, en particulier d'un siège pour enfant de véhicule automobile, le dispositif comprenant :
- un élément mobile (20) fonctionnant associé à la sangle (12) de façon à se déplacer vers une position donnée, qui est indicatrice de la condition de tension correcte, par suite de la force de traction exercée sur la sangle (12) ;
- des moyens élastiques (22) destinés à exercer, sur l'élément mobile (20), une action opposée à celle exercée par la force de traction sur la sangle (12) de façon à empêcher l'élément mobile (20) d'atteindre ladite position tant que la force de traction exercée sur la sangle (12) est inférieure à une valeur prédéterminée donnée, et
- des moyens d'affichage (24 ; G, R) destinés à fournir un signal indicateur de la condition de tension correcte de la sangle (12) quand l'élément mobile (20) est dans ladite position ;
- un boîtier (16) à l'intérieur duquel l'élément mobile (20) est monté, ladite sangle de retenue (12) formant une branche continue s'étendant à travers ledit boîtier (16) ;
**caractérisé en ce que** ledit élément mobile (20) est un cylindre, qui s'étend dans la direction transversale par rapport à ladite sangle (12), tourne autour de son propre axe vers ladite position à l'encontre de l'action desdits moyens élastiques, et comporte une fente diamétrale (26) dans laquelle pénètre ladite sangle de retenue (12).

2. Dispositif selon la revendication 1, **caractérisé en ce que** ledit boîtier (16) comprend une paire de fentes de guidage (18a, 18b) placées sur des côtés opposés dudit élément mobile et dans lesquelles pénètre de manière coulissante ladite sangle de retenue (12).

3. Dispositif selon la revendication 1 ou 2, **caractérisé en ce qu'**il comprend en outre un élément de blocage (28) pour fixer le dispositif (10) dans une position prédéterminée le long de ladite sangle de retenue (12).

4. Dispositif selon les revendications 2 et 3, **caractérisé en ce que** ledit élément de blocage comprend un ergot (28) adapté pour presser ladite sangle de retenue (12) contre une surface d'une desdites fentes de guidage (18a).

5. Dispositif selon l'une quelconque des revendications précédentes, **caractérisé en ce que** lesdits moyens d'affichage comprennent au moins une fenêtre (24) formée dans une paroi du boîtier (16) et au moins un symbole graphique (G) qui est indicateur de la condition de tension correcte de la sangle (12), et qui est prévu sur l'élément mobile (20) de manière à être visible à travers la fenêtre (24) quand l'élément mobile (20) est dans ladite position de tension correcte.
